# EUROPEAN PATENT SPECIFICATION

(11) **EP 3 160 673 B1**
(45) Date of publication and mention of the grant of the patent: **01.09.2021**
(21) Application number: 15753176.5
(22) Date of filing: 26.06.2015
(51) Int. Cl.: B23D 57/00, B28D 1/08, B28D 7/04

(54) **WIRE SHAPING MACHINE FOR CUTTING BLOCKS OF NATURAL STONE MATERIAL**
DRAHTFORMMASCHINE ZUM SCHNEIDEN VON BLÖCKEN AUS NATURSTEINMATERIAL
MACHINE DE FAÇONNAGE À FIL POUR COUPER DES BLOCS DE MATÉRIAU EN PIERRE NATURELLE

(30) Priority: 27.06.2014 IT TV20140092
(43) Date of publication of application: 03.05.2017
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti, Gianfranco
(86) International application number: PCT/IB2015/054826
(87) International publication number: WO 2015/198281

(56) References cited:
- EP-A2- 1 055 498
- WO-A1-02/34490
- WO-A1-93/08947
- WO-A1-2007/021193
- WO-A1-2007/036784
- BE-A1- 904 728
- DE-A1- 4 406 034
- DE-A1- 19 722 123
- FR-E- 19 463
- IT-B- 1 248 898

## Description

The present invention relates to a wire shaping machine for cutting natural stone material.

In particular, the present invention relates to a shaping machine for the shaped cutting of blocks of natural stone material such as granite and marble, for the building sector, funeral art, sculpture and similar sectors.

The invention in question relates in particular to single-wire shaping machines, it being understood that the innovative principles which will become clear below may also be adopted in multi-wire machines.

"Cutting wire" is understood for example as referring to a diamond wire which, being well-known to the person skilled in the art, will not be further described.

The shaping machines according to the prior art are provided with a block-support carriage on which the block to be cut is arranged. The block-support carriage is generally formed by a frame provided with wheels and adapted to travel along guides towards and away from the zone where cutting is performed.

The movement of the block-support carriage along the guides is usually performed by means of motor-driven wheels or a coupling consisting of motor-driven pinion and rack, or an actuating system consisting of motor-driven screw and lead nut.

The block-support carriage further comprises a support surface which is arranged above the frame and on which the block to be cut is positioned. The support surface may also be rotatable about a vertical axis in order to orient the block to be cut in different directions.

Two columns, which are generally connected at their top ends by a stiffening beam, are provided in the cutting zone on the two sides of the block-support carriage.

Each column is provided with a carriage (also called flywheel carriage or pulley-support carriage) adapted to slide along guides mounted on the respective column.

Generally, the movement of each carriage along the respective column is performed by means of a motor-driven screw and lead nut actuating system.

Each carriage is provided with at least one pulley which is designed to receive a cutting wire so that it may extend between the two carriages. Generally, one of the two pulleys is the driving pulley, while the other one is the driven pulley.

In the more complex machine versions the two carriages are movable independently along the respective column so as to be able to positioned at different heights. In this way, the cutting wire, along the cutting section, may be inclined with respect to the horizontal direction.

Generally the maximum inclination of the cutting section is equal to about ± 20° and the wire may assume any inclination ranging between an inclination of 20° and the horizontal condition.

The shaping machines according to the prior art moreover may be distinguished in terms of the number of pulleys which are provided for each carriage, namely:
- two pulleys (having a diameter of a few tens of centimetres) for each carriage and for each wire, which are therefore spaced from each other heightwise; or
- one pulley having a diameter greater than the pulleys of the preceding case for each carriage.

The pulley or the pulleys may be mounted on the respective carriage by means of supports movable with respect to the carriage, so as to allow for example rotation of the pulley unit about an axis of rotation substantially perpendicular to the vertical plane which contains the two columns and their displacement along an axis parallel to the extension of the cutting section of the wire.

These movements are imparted to the pulleys in the case where the two carriages are positioned at different heights, in order to maintain the substantially rectangular arrangement of the cutting wire around the pulleys.

In this type of machine, by controlling and suitably simultaneously the movement of the block-support carriage, the carriages and the pulleys it is possible to perform cuts which are inclined with respect to the vertical direction.

A roller-type wire-guiding device may be mounted on each carriage. The wire guides, which are positioned in the vicinity of the block, have the task of guiding the wire along the cutting section.

The two wire-guiding devices may be generally moved towards or away from the respective carriage. In other words the wire-guiding devices may be moved away from or towards the block to be cut, so that the wire-guiding devices are positioned as close as possible to the block to be cut.

Each wire-guiding device may consist, for example, of two mutually facing and spaced rollers between which the cutting wire travels.

The two rollers are usually adapted to rotate about the axis of the said wire, so that the grooves of the rollers are oriented in the direction of advancing movement of the cut such as to press the wire against the material to be cut, even if the cut is performed in a direction inclined with respect to the vertical.

The machine is equipped with a control unit for defining and controlling the movements described above, so as to follow a programmed cutting path. In the present description the movement means will not be described in greater detail since they are known to the person skilled in the art.

The control unit permits moreover to define other movements or operations such as: any pauses in order to straighten the wire and eliminate any bowing which develops during cutting, stoppages in order to fix the block in position, reverse feeding in order to remove the wire from the block automatically and resume the cut starting from another point, etc.

With this type of machine it is thus possible to perform varied types of cut so as to obtain various shaped surfaces, such as cylindrical, conical or partially flat and partially curved surfaces.

A typical operating sequence in this type of machine envisages firstly programming of the control unit, followed by the step for carrying out the work where the block to be cut is loaded and suitably positioned on the block-support carriage.

It is also possible for the position and measurements of the block to be detected automatically by means of special detection means.

Depending on the configuration and the complexity of the machine, the control unit may be able to manage as many as ten movements (ten axes):
1) vertical displacement of a first pulley-support carriage;
2) vertical displacement of a second pulley-support carriage;
3) displacement of the block-support carriage;
4) rotation about a vertical axis of the block-support carriage;
5) inclination of the pulley support of the first carriage;
6) inclination of the pulley support of the second carriage;
7) rotation of the first wire-guiding device about the axis of the wire;
8) rotation of the second wire-guiding device about the axis of the wire;
9) extraction of the first wire-guiding device relative to the first carriage; and
10) extraction of the second wire-guiding device relative to the second carriage.

The prior art although widely used and accepted is not without drawbacks.

For example in machine where the carriages move independently in order to be able to incline the wire, a variation in the position of the wire also varies the extension of the wire around the pulleys.

Therefore driving of the pulleys must be performed so as to keep the length of the extension of the wire around the pulleys always constant and equal to the length of the wire itself, so as to maintain a constant wire tension.

Moreover, during cutting, the wire tension is continuously detected by a transducer and consequently the position of the pulleys is modified, if necessary, in order to keep the tension constant.

In the machines of the prior art, generally the pulleys of one of the two carriages are movable towards or away from the other pulleys. A pulley-support structure movable with respect to its carriage is therefore envisaged.

Alternatively, machines are also known where an additional tensioning pulley is provided, separate from the pulleys of the carriage and moved depending on the tension of the cutting wire detected by the transducer.

It is known, however, that these configurations, although they solve the problems associated with tensioning, are solutions which are complicated both from the point of the constructional design and as regards their operation.

EP 1 055 498 A2 discloses the preamble of claim 1. It discloses a wire shaping machine comprising two columns, each of which is provided with a carriage.

The object of the present invention is therefore to solve at least partially the drawbacks of the prior art.

A first task of the present invention is to provide a shaping machine which is constructionally simple.

A second task of the present invention is to provide a system for tensioning the cutting wire which is simple and low-cost compared to the systems of the prior art.

A further task of the present invention is to provide a tensioning system which can be easily managed during the machining operations.

The object and tasks are achieved with a wire shaping machine according to Claim 1.

In particular, the idea which has occurred is provide a cutting wire shaping machine comprising two columns on each of which a carriage with at least one pulley is arranged. The pulleys are adapted to engage and move a cutting wire between the carriages. The machine also comprises a tensioning pulley operationally associated with at least one of the pulleys provided on the two carriages and adapted to be moved in a relative manner with respect to the carriage pulley, along the column or parallel thereto, wherein the tensioning pulley also engages with the cutting wire.

Further characteristic features of the present invention are the subject of the dependent claims.

The characteristic features and advantages of the present invention will emerge more clearly with reference to a number of examples of application, provided by way of non-limiting illustration, in connection with the attached drawings in which:
Fig. 1 is a front view showing in schematic form of a shaping machine according to the present invention in a first working configuration;
Fig. 2 is a front view, similar to Fig. 1, in which the shaping machine according to the present invention is shown in a second working configuration;
Fig. 3 is a top plan view which shows in schematic form the shaping machine according to Fig. 1; and
Fig. 4 is a side view which shows in schematic form the shaping machine according to Fig. 1.

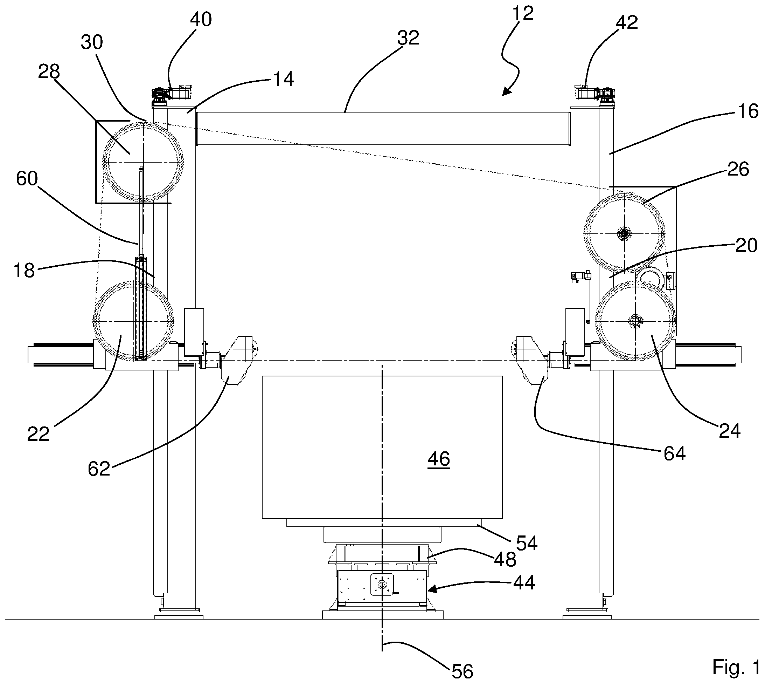

With reference to Figure 1, the reference number 12 indicates in a general manner a cutting wire shaping machine according to the present invention.

The shaping machine 12 comprises two columns 14, 16, the tops of which may be connected together by a stiffening beam 32.

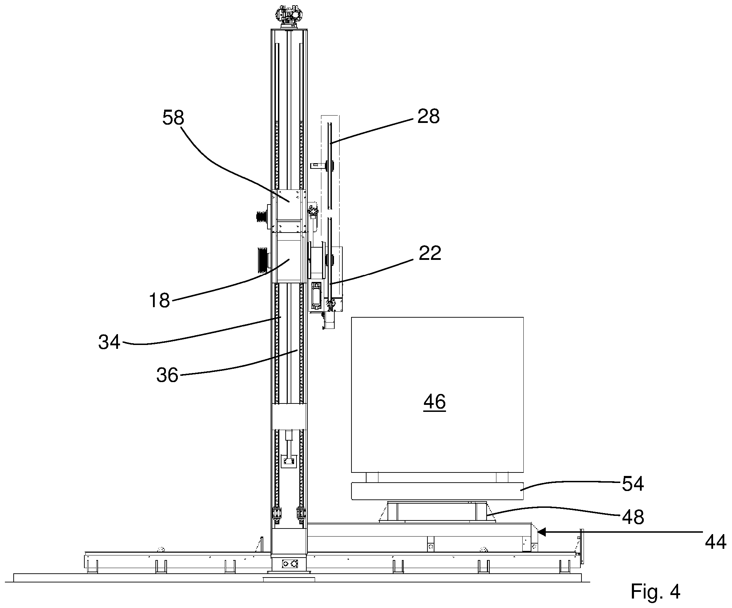

Each column 14, 16 is provided with a carriage 18, 20 adapted to slide along the column. Each carriage 18, 20 comprises sliding means adapted to slide along guides 34, 36 which may be provided on the side of the column (see Figure 4 in this connection). Since the sliding means and the guides are known per se to the person skilled in the art, they will not be further described.

Movement of the carriages 18, 20 along the columns may be performed for example by means of screw and lead nut actuating systems, such as that in Fig. 4.

This type of actuating system may comprise a screw, operated by a motor 40, 42, which in the embodiment of the present invention shown in the attached figures is provided at the top of the columns 14, 16.

Each carriage 18, 20 is provided with at least one pulley.

In the preferred embodiment of the present invention, shown in the attached figures, a carriage 18 comprises a pulley 22, while the other carriage comprises two pulleys 24, 26 arranged substantially on top of each other in the vertical direction.

The pulleys and their function are known per se to the person skilled in the art and therefore will not be further described.

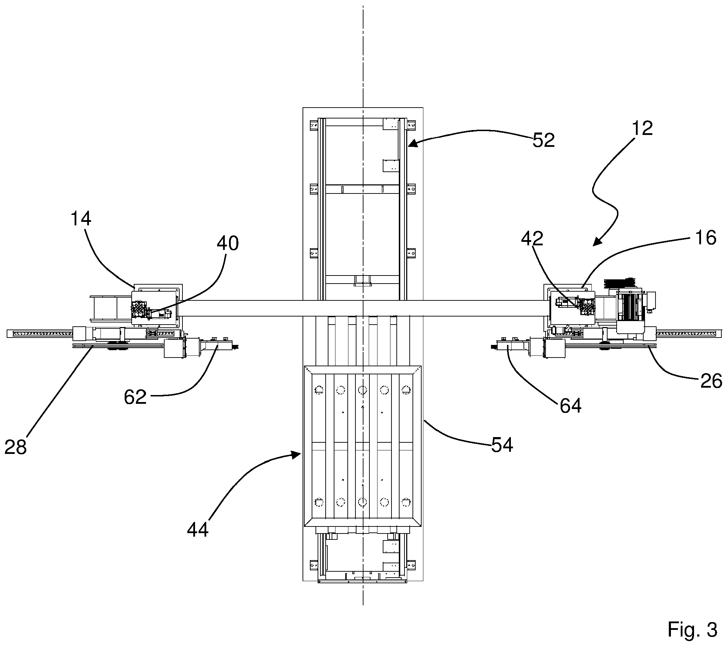

The shaping machines preferably may further comprise a block-support carriage 44 on which the block to be cut, indicated in schematic form in the figures by the reference number 46, is positioned. The block-support carriage 44 is generally formed by a frame 48 provided with wheels designed to travel along guides 52 towards or away from the zone where the cut is performed, and by a support surface 54. Λ possible embodiment of the guides 52 is shown in Figure 3.

The movement of the block-support carriage 44 along the guides 52 may be performed in a manner known per se to the person skilled in the art, for example by means of a motor-driven screw and lead nut actuating system.

The support surface 54 may also be rotatable about a vertical axis 56 in order to orient the block to be cut 46 in different directions. -

The shaping machine according to the invention comprises a tensioning pulley 28, in the vicinity of at least one of the pulleys 22, 24, 26, adapted to be moved relative to the pulley 22, 24 or 26 of the carriage 18, 20.

According to the invention, the tensioning pulley 28 is provided so as to operate in conjunction with the pulley 22 of the carriage 18 and is adapted to be moved towards or away from the pulley 22 so as to reduce or increase the extension of the cutting wire around the pulleys, along the column or in the direction parallel thereto.

The tensioning pulley 28 may be independent with respect to the pulley 22 or may be connected thereto by means of movement means.

With reference to the embodiment of the present invention shown in the attached figures, the column 14 may be provided with a tensioning carriage 58, as can be clearly seen in Figure 4, on which the tensioning pulley 28 is arranged, in order to control and adjust the tension of the cutting wire. The tensioning carriage 58 may be provided with sliding means which can be easily imagined per se by the person skilled in the art, being designed to slide along the same guides 34, 36 of the carriage 18.

Advantageously, the tensioning carriage 58 is adapted to be moved with respect to the carriage 18 along the column 14.

The tensioning carriage 58 is provided with movement means 60 adapted to move the tensioning carriage 58 relative to the carriage 18, achieving the desired tension of the wire.

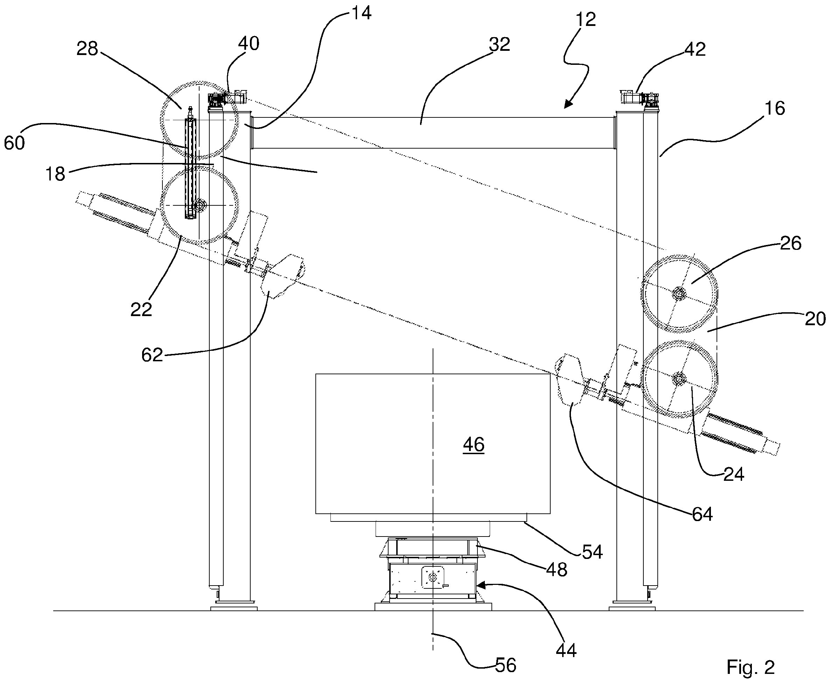

The movement means 60 may be for example a pneumatic (piston/cylinder) actuating system, as shown in Figures 1 and 2, which allows modulation and continuous adjustment of the thrust and therefore the tension imparted to the wire. In fact, the pneumatic system allows the position of the tensioning pulley 28 to be automatically adapted to the length of the wire in the various cutting configurations, ensuring a constant wire tension.

During use, the tensioning pulley 28 may thus be used:
- in the cutting configuration where the cutting wire is not inclined with respect to the horizontal direction, the tensioning pulley 28 will be at the maximum distance from the pulley 22 (Figure 1); while
- in the cutting configuration where the cutting wire is inclined with respect to the horizontal direction, the tensioning pulley 28 will be moved towards the pulley 22, in order to compensate for the increase in the length of the cutting section and the section opposite the latter (Figure 2).

Therefore, the tensioning pulley is movable between two limit positions:
- a position in which the tensioning pulley 28 is at the maximum distance from the pulley 22, corresponding to a horizontal arrangement of the cutting section;
- a position in which the tensioning pulley 28 is at the minimum distance from the pulley 22, corresponding to the maximum inclination arrangement of the cutting section with respect to the horizontal direction;

With the system described above, it is therefore possible to compensate in a simple manner for the increase or reduction in the length of the cutting section and its opposite section.

It is also possible to ensure practically constant tensioning of the cutting wire. The machine is equipped with a control unit for management of the movements of the machine, as mentioned above.

In particular, transducers able to detect the tension of the cutting wire during machining may be provided. The data detected may then be sent to the control unit which processes the data, sending a positioning command to the tensioning pulley 28.

By means of this system it is possible to keep the tension of the cutting wire at the optimum value.

The machine according to the present invention further comprises for each carriage 18, 20 a wire-guiding device 62, 64.

The wire-guiding devices 62, 64 are installed on structures which can be inclined with respect to the associated carriage so as to be movable in the axial direction of the wire along the cutting section, towards or away from the respective carriage, so as to be able to be positioned as close as possible to the block to be cut.

The wire-guiding devices 62, 64 comprise at least two mutually facing and spaced rollers between which the cutting wire travels.

The two rollers are usually adapted to rotate about the axis of the said wire, so that the grooves of the rollers are oriented in the direction of advancing movement of the cut such as to press the wire against the material to be cut, even if the cut is performed in a direction inclined with respect to the vertical.

In accordance with the present invention, the wire-guiding devices 62, 64 are controlled by the control unit, both as regards the inclination with respect to the carriage and as regards the position with respect to the respective carriage and also the axial rotation about the wire.

In accordance with a possible embodiment of the present invention, each movement of the wire-guiding devices 62, 64 may be performed by means of an associated motor of the brushless type provided with position control encoder. The control unit may then be adapted to control the position and the speed of the single axes, interpolating their movements.

Since said wire-guiding devices are known per se to the person skilled in the art, they will not be further described.

The person skilled in the art, in order to satisfy specific requirements, may make modifications to the embodiments described above and/or replace the parts described with equivalent parts, without thereby departing from the scope of the accompanying claims.

For example, in place of the carriage 20 provided with two pulleys 24, 26 as shown in the attached figures, a carriage 20 with a single larger-size pulley may be used.

Embodiments in which the shaping machine comprises two tensioning pulleys, one in the vicinity of each carriage, may also be envisaged.

## Claims

1. Wire shaping machine (12) comprising:
two columns (14, 16) each of which is provided with a carriage (18, 20), at least one pulley (22, 24) being provided on each carriage (18, 20), the pulleys (22, 24) being designed to engage with and move at least one cutting wire extending between them,
comprising a tensioning pulley (28) operating in conjunction with at least one respective pulley (22, 24) adapted to be moved relative to the respective pulley (22, 24), along the column or in a direction substantially parallel thereto, said tensioning pulley (28) also engaging with the wire;
**characterized in that** it comprises a control unit and wire-guiding devices (62, 64) adapted to be inclined relative to the respective carriage and moved in the axial direction of the wire along the cutting section, towards or away from the respective carriage, so as to be able to positioned as close as possible to the block to be cut, the wire-guiding devices (62, 64) comprising at least two mutually facing and spaced rollers between which the cutting wire travels, the rollers being adapted to rotate about the axis of the said wire, so that the grooves of the rollers are oriented in the direction of advancing movement of the cut, said wire-guiding devices (62, 64) being controlled by the control unit, both as regards the inclination relative to the respective carriage and as regards the position relative to the respective carriage and also axial rotation about the wire.

2. Shaping machine (12) according to the preceding claim, **characterized in that** said tensioning pulley (28) is movable between:
a position in which the tensioning pulley (28) is at the maximum distance from the respective pulley (22), corresponding to the cutting section having a horizontal direction;
a position in which the tensioning pulley (28) is at the minimum distance from the respective pulley (22), corresponding to the cutting section having a maximum inclination with respect to the horizontal direction.

3. Shaping machine (12) according to any one of the preceding claims, **characterized in that** said tensioning pulley (28) is arranged on a tensioning carriage (58) provided with movement means (60) adapted to move said tensioning carriage along a column (14) with respect to the carriage (18).

4. Shaping machine (12) according to Claim 3, **characterized in that** said tensioning carriage (58) slides along the guides of the carriage (18).

5. Shaping machine according to any one of the preceding claims, **characterized in that** it comprises a control unit designed to adjust the position of the tensioning pulley (28) so as to keep the tension of the cutting wire constant.

6. Shaping machine according to either one of Claims 3 - 4, **characterized in that** said movement means (60) consist of a pneumatic actuating system designed to keep the tension of the cutting wire constant.

7. Shaping machine (12) according to any one of the preceding claims, **characterized in that** one carriage (18) comprises a first pulley (22) and one carriage (20) comprises two pulleys (24, 26) which are arranged substantially in vertical alignment, said tensioning pulley (28) being associated with the first pulley (22).

8. Shaping machine according to any one of the preceding claims, **characterized in that** it comprises a block-support carriage (44) designed to travel along guides (52) towards or away from the zone where cutting is performed.

9. Shaping machine according to the preceding claim, **characterized in that** said block-support carriage (44) comprises a support surface (54) rotating about a substantially vertical axis.

10. Shaping machine according to any one of the preceding claims, **characterized in that** each movement of the wire-guiding devices (62, 64) may be performed by means of an associated motor of the brushless type provided with position control encoder, said control unit being designed to control the position and the speed of the single axes, interpolating their movements.

## Patentansprüche

1. Drahtformungsmaschine (12), umfassend:
zwei Säulen (14, 16), von denen jede mit einem Wagen (18, 20) versehen ist, wobei an jedem Wagen (18, 20) mindestens eine Rolle (22, 24) angeordnet ist, wobei die Rollen (22, 24) dazu ausgelegt sind, mit mindestens einem sich zwischen ihnen erstreckenden Schneidedraht in Eingriff zu kommen und diesen zu bewegen,
umfassend eine Spannrolle (28), die mit mindestens einer jeweiligen Rolle (22, 24) zusammenwirkt und daran angepasst ist, relativ zu der jeweiligen Rolle (22, 24) entlang der Säule oder in einer im Wesentlichen parallelen Richtung dazu bewegt zu werden, wobei die Spannrolle (28) ebenfalls mit dem Draht in Eingriff steht,
**dadurch gekennzeichnet, dass** sie eine Steuereinheit und Drahtführungsvorrichtungen (62, 64) umfasst, die daran angepasst sind, relativ zu dem jeweiligen Wagen geneigt und in der axialen Richtung des Drahts entlang des Schneidabschnitts auf den jeweiligen Wagen zu oder von ihm weg bewegt zu werden, um so nahe wie möglich an dem zu schneidenden Block positioniert werden zu können, wobei die Drahtführungsvorrichtungen (62, 64) mindestens zwei einander zugewandte und voneinander beabstandete Walzen umfassen, zwischen denen sich der Schneidedraht bewegt, wobei die Walzen daran angepasst sind, sich um die Achse des Drahts zu drehen, so dass die Nuten der Walzen in Richtung der Vorschubbewegung des Schnitts ausgerichtet sind, wobei die Drahtführungsvorrichtungen (62, 64) von der Steuereinheit sowohl hinsichtlich der Neigung in Bezug auf den jeweiligen Wagen als auch hinsichtlich der Position in Bezug auf den jeweiligen Wagen und auch der axialen Drehung um den Draht gesteuert werden.

2. Formungsmaschine (12) gemäß dem vorhergehenden Anspruch, **dadurch gekennzeichnet, dass** die Spannrolle (28) beweglich ist zwischen:
einer Position, in der sich die Spannrolle (28) im maximalen Abstand von der jeweiligen Rolle (22) befindet, was dem Schneidabschnitt mit einer horizontalen Richtung entspricht;
einer Position, in der sich die Spannrolle (28) im minimalen Abstand von der jeweiligen Rolle (22) befindet, was dem Schneidabschnitt mit einer maximalen Neigung in Bezug auf die horizontale Richtung entspricht.

3. Formungsmaschine (12) gemäß einem der vorhergehenden Ansprüche, **dadurch gekennzeichnet, dass** die Spannrolle (28) auf einem Spannwagen (58) angeordnet ist, der mit Bewegungsmitteln (60) versehen ist, die angepasst sind, den Spannwagen entlang einer Säule (14) in Bezug auf den Wagen (18) zu bewegen.

4. Formungsmaschine (12) gemäß Anspruch 3, **dadurch gekennzeichnet, dass** der Spannwagen (58) entlang der Führungen des Wagens (18) gleitet.

5. Formungsmaschine gemäß einem der vorhergehenden Ansprüche, **dadurch gekennzeichnet, dass** sie eine Steuereinheit umfasst, die dazu ausgelegt ist, die Position der Spannrolle (28) so einzustellen, dass die Spannung des Schneidedrahtes konstant gehalten wird.

6. Formungsmaschine gemäß einem der Ansprüche 3 bis 4, **dadurch gekennzeichnet, dass** die Bewegungseinrichtung (60) aus einem pneumatischen Betätigungssystem besteht, das dazu ausgelegt ist, die Spannung des Schneidedrahtes konstant zu halten.

7. Formungsmaschine (12) gemäß einem der vorhergehenden Ansprüche, **dadurch gekennzeichnet, dass** ein Wagen (18) eine erste Rolle (22) und ein Wagen (20) zwei Rollen (24, 26) aufweist, die im Wesentlichen in vertikaler Ausrichtung angeordnet sind, wobei die Spannrolle (28) der ersten Rolle (22) zugeordnet ist.

8. Formungsmaschine gemäß einem der vorhergehenden Ansprüche, **dadurch gekennzeichnet, dass** sie einen Blockträgerwagen (44) aufweist, der dazu ausgelegt ist, sich entlang von Führungen (52) zu der Zone, in der das Schneiden durchgeführt wird, hin oder von ihr weg zu bewegen.

9. Formungsmaschine gemäß dem vorhergehenden Anspruch, **dadurch gekennzeichnet, dass** der Blockträgerwagen (44) eine Auflagefläche (54) aufweist, die sich um eine im Wesentlichen vertikale Achse dreht.

10. Formungsmaschine gemäß einem der vorhergehenden Ansprüche, **dadurch gekennzeichnet, dass** jede Bewegung der Drahtführungsvorrichtungen (62, 64) mittels eines zugehörigen Motors des bürstenlosen Typs ausgeführt werden kann, der mit einem Positionssteuerungscodierer versehen ist, wobei die Steuereinheit dazu ausgelegt ist, die Position und die Geschwindigkeit der einzelnen Achsen zu steuern und ihre Bewegungen zu interpolieren.

## Revendications

1. Machine de façonnage à fil (12) comprenant :
deux colonnes (14, 16) dont chacune est prévue avec un chariot (18, 20), au moins une poulie (22, 24) étant prévue sur chaque chariot (18, 20), les poulies (22, 24) étant conçues pour se mettre en prise avec et déplacer au moins un fil de coupe s'étendant entre elles,
comprenant une poulie de tension (28) fonctionnant conjointement avec au moins une poulie (22, 24) respective adaptée pour être déplacer par rapport à la poulie (22, 24) respective, le long de la colonne ou dans une direction sensiblement parallèle à cette dernière, ladite poulie de tension (28) se mettant également en prise avec le fil ;
**caractérisée en ce qu'**elle comprend une unité de commande et des dispositifs de guidage de fil (62, 64) adaptés pour être inclinés par rapport au chariot respectif et déplacés dans la direction axiale du fil le long de la section de coupe, vers ou à distance du chariot respectif, afin de pouvoir être positionnés aussi près que possible du bloc à couper, les dispositifs de guidage de fil (62, 64) comprenant au moins deux rouleaux se faisant mutuellement face et espacés entre lesquels le fil de coupe se déplace, les rouleaux étant adaptés pour tourner autour de l'axe dudit fil, de sorte que les rainures des rouleaux sont orientées dans la direction du mouvement d'avancement de la coupe, lesdits dispositifs de guidage de fil (62, 64) étant commandés par l'unité de commande, à la fois concernant l'inclinaison par rapport au chariot respectif et concernant la position par rapport au chariot respectif et également la rotation axiale autour du fil.

2. Machine de façonnage (12) selon la revendication précédente, **caractérisée en ce que** ladite poulie de tension (28) est mobile entre :
une position dans laquelle la poulie de tension (28) est à la distance maximum de la poulie (22) respective, correspondant à la section de coupe ayant une direction horizontale ;
une position dans laquelle la poulie de tension (28) est à la distance minimum de la poulie (22) respective, correspondant à la section de coupe ayant une inclinaison maximum par rapport à la direction horizontale.

3. Machine de façonnage (12) selon l'une quelconque des revendications précédentes, **caractérisée en ce que** ladite poulie de tension (28) est agencée sur un chariot de tension (58) prévu avec un moyen de déplacement (60) adapté pour déplacer ledit chariot de tension le long d'une colonne (14) par rapport au chariot (18).

4. Machine de façonnage (12) selon la revendication 3, **caractérisée en ce que** ledit chariot de tension (58) coulisse le long des guides du chariot (18).

5. Machine de façonnage selon l'une quelconque des revendications précédentes, **caractérisée en ce qu'**elle comprend une unité de commande conçue pour ajuster la position de la poulie de tension (28) afin de maintenir la tension du fil de coupe constante.

6. Machine de façonnage selon l'une des revendications 3 à 4, **caractérisée en ce que** lesdits moyens de déplacement (60) se composent d'un système d'actionnement pneumatique conçu pour maintenir la tension du fil de coupe constante.

7. Machine de façonnage (12) selon l'une quelconque des revendications précédentes, **caractérisée en ce qu'**un chariot (18) comprend une première poulie (22) et un chariot (20) comprend deux poulies (24, 26) qui sont agencées sensiblement en alignement vertical, ladite poulie de tension (28) étant associée avec la première poulie (22).

8. Machine de façonnage selon l'une quelconque des revendications précédentes, **caractérisée en ce qu'**elle comprend un chariot de support de bloc (44) conçu pour se déplacer le long des guides (52) vers ou à distance de la zone où la coupe est réalisée.

9. Machine de façonnage selon la revendication précédente, **caractérisée en ce que** ledit chariot de support de bloc (44) comprend une surface de support (54) tournant autour d'un axe sensiblement vertical.

10. Machine de façonnage selon l'une quelconque des revendications précédentes, **caractérisée en ce que** chaque mouvement des dispositifs de guidage de fil (62, 64) peut être réalisé au moyen d'un moteur associé de type sans balai prévu avec un encodeur de commande de position, ladite unité de commande étant conçue pour commander la position et la vitesse des axes uniques, interpolant leurs mouvements.
